# EUROPÄISCHE PATENTSCHRIFT

(11) **EP 1 184 241 B1**
(45) Veröffentlichungstag und Bekanntmachung des Hinweises auf die Patenterteilung: **20.07.2005**
(21) Anmeldenummer: 00118937.2
(22) Anmeldetag: 01.09.2000
(51) Int. Cl.: B60S 5/02, B67D 5/14, G07F 7/02, G07F 13/02

(54) **Verfahren zur automatischen Kontrolle von Fahrzeugbetankungsvorgängen**
Method for automatic control of a vehicle tank refill operation
Méthode pour le contrôle automatique d'une opération de remplissage d'un réservoir de véhicule

(43) Veröffentlichungstag der Anmeldung: 06.03.2002
(73) Patentinhaber: SCHEIDT & BACHMANN GMBH, D-41238 Mönchengladbach (DE)
(72) Erfinder: Miller, Norbert, Dr., 41063 Mönchengladbach (DE); Classen, Dieter, Dipl.-Ing., 41352 Korschenbroich (DE)
(74) Vertreter: Stenger, Watzke & Ring Patentanwälte

(56) Entgegenhaltungen:
- EP-A- 0 952 561
- WO-A-98/47116
- WO-A-98/54678

## Beschreibung

Die vorliegende Erfindung betrifft ein Verfahren zur automatischen Kontrolle von Fahrzeugbetankungsvorgängen, bei welchen eine Bezahlung einer entnommenen Kraftstoffmenge bargeldlos unter Verwendung einer dem Fahrzeug zugeordneten Kreditkarte bei gleichzeitiger Feststellung des Ortes des Fahrzeuges zum Zeitpunkt der Verwendung der Kreditkarte erfolgt.

Bei Speditionen und anderen Organisationen mit großem Fuhrpark ist es üblich, den Fahrern Kreditkarten auszuhändigen, mit welchen sie diese Fahrzeugbetankungen bezahlen können. Dadurch werden die Fahrer nicht direkt belastet, sondern das oder die zentralen Fahrzeugkonten des entsprechenden Furhparkunternehmers und der Verwaltungsaufwand ist erheblich reduziert. Die Kreditkarten können einzelnen Fahrzeugen oder allgemeinen Fuhrpark zugehörigen Fahrzeugen zugeordnet sein, wenn die Fahrer die Fahrzeuge häufig wechseln.

Eine wesentliches Problem dieses Systems zur Betankung von Fuhrparkfahrzeugen unter Verwendung von Kreditkarten ist die Kontrolle des Unternehmens in Bezug auf die regelgerechte Benutzung dieser Karten. Aus Unternehmenssicht muß ausgeschlossen sein, daß andere als Fuhrparkfahrzeuge betankt und zur Bezahlung die den Fuhrparkfahrzeugen zugeordneten Kreditkarten verwendet werden.

Bekannte Verfahren umfassen die Notwendigkeit der manuellen Eingabe des Kilometerstandes in das Kreditkartenterminal durch den Fahrer. Über Verbrauchsberechnungen erfolgt so eine Kontrolle. Gemäß einem weiteren vorbekannten Verfahren werden sowohl die Fuhrparkwerkzeuge als auch die Zapfsäulen an Tankstellen mit Zusatzgeräten ausgestattet, so daß ein elektronischer Abgleich zwischen mit Zusatzgerät ausgestattetem Fahrzeug und Zapfsäule während eines Betankungsvorganges stattfindet. So kann nur ein tatsächlich mit einem Zusatzgerät ausgestattetes Fahrzeug betankt werden und es werden Informationen wie Kilometerstand und dergleichen ausgetauscht. Diese Systeme bedingen jedoch eine Aufrüstung der Tankstellen und der Fahrzeuge, was jedoch nur auf kleine Einsatzregionen der Fahrzeuge beschränkt sein kann, während sich Betankungen in abgelegenen Regionen wiederum der Kontrolle entziehen (siehe auch WO 81/02940).

Alle vorbekannten Verfahren räumen Möglichkeiten zur Manipulation ein, indem Zusatzgeräte umrüstbar sind, Kilometerstände ungenau oder falsch angegeben werden und dergleichen. Durch einen entsprechenden Mißbrauch ergeben sich erhebliche betriebswirtschaftliche Schäden.

Ausgehend vom vorbeschriebenen Stand der Technik liegt der vorliegenden Erfindung die **Aufgabe** zugrunde, ein Verfahren der gattungsgemäßen Art dahingehend zu verbessern, daß eine weitestgehende automatisierte Kontrolle bei Fahrzeugbetankungsvorgängen ermöglicht und somit Manipulationen weitestgehend ausgeschlossen sind.

Zur technischen **Lösung** wird mit der Erfindung vorgeschlagen, daß die geographische Position des Fahrzeugs zum Betankungszeitpunkt ermittelt und mittels Datenfernübertragung einer Zentralstelle zur Durchführung eines Abgleiches der geographischen Position mit dem Ort der Verwendung der Kreditkarte übermittelt werden.

Das erfindungsgemäße Verfahren basiert auf einem Abgleich der geographischen Position eines Fuhrparkfahrzeuges mit dem Ort der Verwendung der Kreditkarte. Während der Verwendung einer Kreditkarte zur Bezahlung einer während eines Betankungsvorganges entnommenen Kraftstoffmenge wird der Ort der Verwendung der Kreditkarte eindeutig identifiziert und festgestellt. Abhängig von einer Auslösung wird die geographische Position des Fuhrparkfahrzeuges ermittelt und mittels Datenfernübertragung einer Zentralstelle übermittelt. Die geographische Position einerseits und der Ort der Verwendung der Kreditkarte andererseits ermöglichen nunmehr einen Ortsabgleich, so daß etwaige Manipulationen schnell und sicher entdeckt und aufgeklärt werden können.

Gemäß einem vorteilhaften Vorschlag der Erfindung wird zur Ermittlung der geographischen Position des Fahrzeugs ein GPS-Empfänger verwendet. Derartige Empfänger sind im Stand der Technik bekannt und lassen sich leicht in Fuhrparkzeuge einrüsten. Derartige Empfänger empfangen Satellitensignale und lassen inzwischen geographische Ortsgenauigkeiten im Bereich von 10 Metern zu. Ein derartiger GPS-Empfänger wird durch eine Steuereinheit, gegebenenfalls ein elektronischer Rechner, ausgelesen und die ermittelte geographische Position mittels Datenfernübertragung an eine Zentralstelle übermittelt. Für die Datenfernübertragung kommen unterschiedliche Systeme in Betracht, beispielsweise ein tankstellendeckendes Funknetz oder ein überregional organisiertes Mobilfunknetz. So kann die geographische Position zusammen mit einer Fahrzeugkennung und gegebenenfalls anderen Informationen wie beispielsweise Kilometerstand und dergleichen im Rahmen einer SMS-Nachricht übermittelt werden. Auch andere Datenfernübertragungs-Protokolle können verwendet werden.

Die Ermittlung der geographischen Position des Fahrzeugs kann entweder dauerhaft bzw. ununterbrochen erfolgen oder aufgrund auslösender Parameter. Auslösende Parameter können die Verwendung der Kreditkarte, aktive Auslösungen durch den Fahrer oder Auslösungen durch Verwendung entsprechender Signalgeber sein. Entsprechende Signalgeber können fahrzeugseitig sein, beispielsweise Ein- und/oder Ausschalten des Motors, Kraftstoffmengenveränderungen im Kraftstofftank während eines Stillstandes, Kilometerstände oder dergleichen. Signalgeber können auch tankstellenbezogen sein, beispielsweise Signalgeber zur Abgabe entsprechender Auslösesignale im Tanksäulenbereich und dergleichen. Die Signalgeber können verkabelt oder berührungslos arbeiten.

Ein weiterer Aspekt ist die Auslösung der Übermittlung der ermittelten geographischen Position des Fuhrparkfahrzeuges. Auch die Auslösung der Übermittlung kann auf unterschiedliche Weise erfolgen, beispielsweise bei Verwendung der Kreditkarte aufgrund einer Abfrage, aufgrund aktiver Auslösung durch den Fahrer durch Bedienung eines Betätigungselementes oder durch die Verwendung entsprechender Signalgeber. Auch in diesem Fall können die Signalgeber fahrzeugbezogen sein, beispielsweise bei Ein- und/oder Ausschalten des Motors, bei Betätigung des Tankdeckels, bei Veränderung der Kraftstoffmenge im Stillstand und dergleichen arbeitend. Auch können die Signalgeber tankstellenseitig sein und bei Einfahrt des Fahrzeugs in den Tankstellenbereich eine Übermittlung auslösen. Auch kann eine Dauerübermittlung festgestellter geographischer Positionen erfolgen oder Parameter wie Zeittakte, Kilometerstände oder dergleichen berücksichtigt werden.

Die Feststellung der geographischen Position und die Auslösung der Übermittlung der geographischen Position an eine Zentralstelle sind aufeinander abgeglichen.

Grundsätzlich kann durch Nutzung der Kreditkarte das Fahrzeug "angerufen" werden, um die Position zu ermitteln. Hierbei geht die Aktion nicht vom Fahrzeug und der Nutzung einer entsprechenden Sensorik oder Auslösung durch den Fahrer aus, sondern durch Gebrauch der Kreditkarte.

Für die Organisation der Zentralstellen sind im Rahmen der Erfindung verschiedene Möglichkeiten gegeben. Es können extra für diesen Zweck im Verbund organisierte Zentralstellen eingerichtet werden, es können Zentralstellen der Kreditkartengeber sein, die an die Verwendung der Kreditkarte gebunden sind, Zentralstellen der Fuhrparkunternehmer oder auch Zentralstellen der Tankstellenbetreiber.

Grundsätzlich kann der Betankungsvorgang selbst auch von der erfindungsgemäßen Verfahrensorganisation abhängig gemacht werden. So ist es im Rahmen der Erfindung, daß bei einem Aufenthalt eines Fuhrparkfahrzeugs im Tankstellenbereich unter Signalisierung einer Betankungsabsicht eine Feststellung und Übermittlung der geographischen Position des Fuhrparkfahrzeuges erfolgen und als Rückantwort an die Tankstelle eine Tankfreigabe übermittelt werden. Dies kann soweit gehen, daß eine bestimmte Tanksäulenzuordnung, gegebenenfalls gekoppelt mit einer Tankmengenfreigabe und dergleichen übermittelt werden. Durch diesen erfindungsgemäßen Aspekt kann eine lückenlose automatisierte Kontrolle erfolgen, indem ein Fahrer ein Fuhrparkfahrzeug in den Bereich einer Tanksäule fährt und dort parkt. Das System ermittelt die geographische Position und übermittelt diese an eine Zentralstelle beispielsweise der Tankstellenbetreiber. Diese geben die spezielle Tanksäule dem Betankungsvorgang frei und können aufgrund von Datenbankinformationen die Bezahlung durch eine bestimmte Kreditkarte oder ein mögliches Kreditkartenspektrum direkt überprüfen.

Zur Durchführung des Verfahrens können an Tankstellen bereits installierte Systeme verwendet werden. Eine weitere geeignete Kontrolle ergibt sich durch die Feststellung einer Veränderung der sich im Kraftstofftank des Fahrzeugs befindlichen Kraftstoffmenge, insbesondere bei einem Stillstand des Fahrzeugs, sowie bei nicht verändernder geographischer Position oder einem ausgeschalteten Motor. Durch eine derartige Maßnahme ist es auch möglich, zu verhindern, daß der Kraftstoff aus einem ordnungsgemäß betankten Fahrzeug wieder abgezogen wird.

Das erfindungsgemäße Verfahren ermöglicht eine automatische und lückenlose Kontrollbetankung von berechtigten Fahrzeugen. Die automatische Ermittlung der geographischen Fahrzeugposition unter Verwendung von GPS-Empfängern sowie die Übermittlung der Fahrzeugposition, vorzugsweise mittels einer SMS-Nachricht unter Verwendung des internationalen GPS-Netzes stellen eine wirtschaftliche und einfache Realisierung des Verfahrens dar. Weiterhin können weitere relevante Daten wie Kilometerstand, Fahrzeugidentifikation, Kraftstoffmenge und dergleichen übermittelt werden. Hieraus ergeben sich auch Kontrollmöglichkeiten für andere fuhrparkorganisatorische Probleme.

An der Bezahlung ändert sich grundsätzlich nichts. Die eigentliche Bezahlung des Tankvorganges folgt in gewohnter Weise mittels einer Kreditkarte. Hierbei ist es unerheblich, ob die Bezahlung an einem Automaten oder an einer Kasse stattfindet. Über jeden Zahlvorgang wird ein Rechnungssatz erstellt, der unter anderem auch die Uhrzeit und die Identifikation der Tankstelle enthält.

Der Positionsdatenvergleich bezogen auf das Fahrzeug einerseits und die Tankstelle andererseits und der entsprechenden Uhrzeiten, die sowohl bei Erstellung eines Rechnungssatzes als auch bei Übermittlung der geographischen Fahrzeugposition übermittelt werden, lassen lückenlos überprüfen, ob sich das berechtigte Fahrzeug tatsächlich an der Tankstelle befunden hat.

Mit der Erfindung wird ein einfaches sowie wirtschaftlich realisierbares Verfahren der automatischen Kontrolle von Fahrzeugbetankungsvorgängen vorgeschlagen, bei welchen Manipulationen und damit betriebswirtschaftliche Schäden nahezu ausgeschlossen werden können.

Weitere Vorteile und Merkmale der Erfindung ergeben sich aus der folgenden Beschreibung anhand der Figuren. Dabei zeigen:

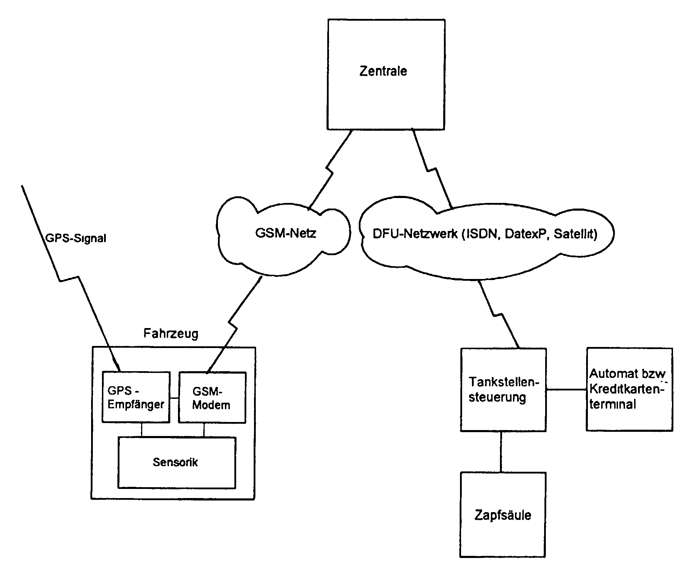

- Fig. 1: eine schematische Darstellung der Systemkomponenten gemäß einem Ausführungsbeispiel.

Gemäß dem in Fig. 1 gezeigten Ausführungsbeispiel befinden sich fahrzeugseitig ein GPS-Empfänger, ein GSM-Modem und eine Sensorik. Der GPS-Empfänger empfängt GPS-Signale zur Ermittlung des geographischen Ortes des Fahrzeuges. In Abhängigkeit von den Steuersignalen einer Sensorik bzw. einer nicht weiter im Detail gezeigten Steuerung wird über das GSM-Modem unter Nutzung des GSM-Netzes ein geographischer Ort des Fahrzeuges an eine Zentrale gemeldet.

Tankstellenseitig umfaßt eine Tankstellensteuerung eine Verbindung zu einem Kreditkartenterminal bzw. einem Automaten sowie einer Zapfsäule. Diese Tankstellensteuerung meldet bei Verwendung einer Kreditkarte dieses unter Verwendung eines DFÜ-Netzwerks, beispielsweise ISDN, DatexP, Satellit, Internet oder dergleichen den Vorgang ebenfalls an die Zentrale. Auf diese Weise stehen in der Zentrale der geographische Ort des Fahrzeuges einerseits und die Information über die Kreditkartenverwendung andererseits gleichzeitig zur Verfügung.

Auch ist es möglich, nach Abgabe eines GPS Orts-Signals über das GSM-Netz von der Zentrale über das DFÜ-Netzwerk und die Tankstellensteuerung eine bestimmte Zapfsäule anzusteuern und für einen Tankvorgang freizugeben.

Das beschriebenen Ausführungsbeispiel dient nur der Erläuterung und ist nicht beschränkend.

## Patentansprüche

1. Verfahren zur automatischen Kontrolle von Fahrzeugbetankungsvorgängen, bei welchen eine Bezahlung einer entnommenen Kraftstoffmenge bargeldlos unter Verwendung einer dem Fahrzeug geordneten Kreditkarte bei gleichzeitiger Feststellung des Ortes der Verwendung der Kreditkarte erfolgt, **dadurch gekennzeichnet, daß** die geographische Position des Fahrzeugs zum Betankungszeitpunkt ermittelt und mittels Datenfernübertragung einer Zentralstelle zur Durchführung eines Abgleiches der geographischen Position mit dem Ort der Verwendung der Kreditkarte übermittelt werden.

2. Verfahren nach Anspruch 1, **dadurch gekennzeichnet, daß** die geographische Position des Fahrzeugs mittels eines GPS-Empfängers ermittelt wird.

3. Verfahren nach einem der vorhergehenden Ansprüche, **dadurch gekennzeichnet, daß** die Übermittlung der geographischen Position unter Nutzung eines Mobilfunknetzes erfolgt.

4. Verfahren nach einem der vorhergehenden Ansprüche, **dadurch gekennzeichnet, daß** die Auslösung der Übermittlung durch die Betätigung eines Signalgebers durch den Fahrer erfolgt.

5. Verfahren nach einem der vorhergehenden Ansprüche, **dadurch gekennzeichnet, daß** die Auslösung der Übermittlung bei Tankdeckelbetätigung erfolgt.

6. Verfahren nach einem der vorhergehenden Ansprüche, **dadurch gekennzeichnet, daß** die Auslösung der Übermittlung durch eine Veränderung einer Kraftstoffmenge im Fahrzeugtank im Stillstand erfolgt.

7. Verfahren nach einem der vorhergehenden Ansprüche, **dadurch gekennzeichnet, daß** die Auslösung der Übermittlung durch einen tankstellenseitigen Signalgeber erfolgt.

8. Verfahren nach Anspruch 7, **dadurch gekennzeichnet, daß** die Auslösung elektronisch erfolgt.

9. Verfahren nach einem der vorhergehenden Ansprüche, **dadurch gekennzeichnet, daß** nach Übermittlung der geographischen Position an eine Zentralstelle von dieser eine Tankfreigabe-Mitteilung an die Tankstelle übermittelt wird.

10. Verfahren nach Anspruch 9, **dadurch gekennzeichnet, daß** die Tankfreigabe mit einer Tanksäulenzuordnung kombiniert wird.

11. Verfahren nach Anspruch 9, **dadurch gekennzeichnet, daß** die Tankfreigabe mit einer Freigabe einer Kreditkarte kombiniert wird, die dem Fahrzeug zugeordnet ist.

## Claims

1. A method of automatically monitoring vehicle tank filling processes, in which a payment for an amount of fuel taken is effected without cash using a credit card associated with the vehicle whilst simultaneously determining the location of the use of the credit card, **characterised in that** the geographical position of the vehicle at the time the tank is filled is determined and transmitted by means of data tele-transmission to a control station for performing a comparison of the geographical position with the location of the use of the credit card.

2. A method as claimed in Claim 1, **characterised in that** the geographical position of the vehicle is determined by means of a GPS receiver.

3. A method as claimed in one of the preceding claims, **characterised in that** the determination of the geographical position is effected with the use of a mobile telephone network.

4. A method as claimed in one of the preceding claims, **characterised in that** the initiation of the determination is effected by the actuation of a signal transmitter by the driver.

5. A method as claimed in one of the preceding claims, **characterised in that** the initiation of the determination is effected on actuation of the tank cap.

6. A method as claimed in one of the preceding claims, **characterised in that** the initiation of the determination is effected by a change in an amount of fuel in the vehicle tank, when standing still.

7. A method as claimed in one of the preceding claims, **characterised in that** the initiation of the determination is effected by a signal transmitter at the filling station.

8. A method as claimed in Claim 7, **characterised in that** the initiation is effected electronically.

9. A method as claimed in one of the preceding claims, **characterised in that** after transmission of the geographical position to a control station, a tank filling clearance communication is transmitted by the latter to the filling station.

10. A method as claimed in Claim 9, **characterised in that** the tank filling clearance is combined with a tank filling pump allocation.

11. A method as claimed in Claim 9, **characterised in that** the tank clearance is combined with a clearance of a credit card, which is associated with the vehicle.

## Revendications

1. Méthode pour le contrôle automatique d'une opération de remplissage d'un réservoir de véhicule, dans laquelle le paiement d'une quantité de carburant prélevée est effectué sans argent liquide en utilisant une carte de crédit associée au véhicule avec détermination simultanée du lieu d'utilisation de la carte de crédit, **caractérisée en ce que** la position géographique du véhicule est déterminée au moment du remplissage et transmise au moyen d'une télétransmission de données à un central qui exécute la comparaison de la position géographique et du lieu d'utilisation de la carte de crédit.

2. Méthode selon la revendication 1, **caractérisée en ce que** la position géographique du véhicule est déterminée au moyen d'un récepteur GPS.

3. Méthode selon l'une quelconque des revendications précédentes, **caractérisée en ce que** la transmission de la position géographique est réalisée à l'aide d'un réseau de radio mobile.

4. Méthode selon l'une quelconque des revendications précédentes, **caractérisée en ce que** la transmission est déclenchée par l'actionnement d'un émetteur de signaux par le conducteur.

5. Méthode selon l'une quelconque des revendications précédentes, **caractérisée en ce que** la transmission est déclenchée par la manipulation du bouchon du réservoir.

6. Méthode selon l'une quelconque des revendications précédentes, **caractérisée en ce que** la transmission est déclenchée par la modification d'une quantité de carburant dans le réservoir du véhicule à l'arrêt.

7. Méthode selon l'une quelconque des revendications précédentes, caracténsée en ce que la transmission est déclenchée par un émetteur de signaux de la station-service.

8. Méthode selon la revendication 7, **caractérisée en ce que** le déclenchement est électromque.

9. Méthode selon l'une quelconque des revendications précédentes, **caractérisée en ce qu'**après la transmission de la position géographique à un central, celui-ci transmet à la station-service une autorisation de fourniture du carburant.

10. Méthode selon la revendication 9, **caractérisée en ce que** l'autorisation de fourniture du carburant est combinée à une affectation à une pompe à carburant.

11. Méthode selon la revendication 9, **caractérisée en ce que** l'autorisation de fourniture du carburant est combinée à une autorisation d'une carte de crédit associée au véhicule.
